# EUROPEAN PATENT SPECIFICATION

(11) **EP 2 873 615 B1**
(45) Date of publication and mention of the grant of the patent: **09.08.2017**
(21) Application number: 13193462.2
(22) Date of filing: 19.11.2013
(51) Int. Cl.: B64D 11/00, E06B 11/04

(54) **Deployable barrier arrangement for selectively blocking a passage in an aircraft cabin**
Ausklappbare Absperranordnung zur selektiven Blockierung eines Durchgangs in einer Flugzeugkabine
Agencement de barrière déployable pour bloquer sélectivement un passage dans une cabine d'aéronef

(43) Date of publication of application: 20.05.2015
(73) Proprietor: Airbus Operations GmbH, 21129 Hamburg (DE)
(72) Inventor: Lau, Michael, 21129 Hamburg (DE)
(74) Representative: Schicker, Silvia

(56) References cited:
- DE-A1-102009 004 525
- US-A1- 2009 260 293

## Description

The present invention relates to a deployable barrier arrangement for selectively blocking a passage in an aircraft cabin. Further, the invention relates to an aircraft cabin area equipped with a deployable barrier arrangement of this kind.

Barrier arrangements of the this type are typically used to temporarily block passages in an aircraft cabin, so that passengers and/or movable items such as trolleys do not pass the barrier arrangement. In this context, the term "passage" generally refers to a cross-sectional area of the aircraft cabin which is otherwise free to enter and pass. A blocking of such a passage may for example be desired during take-off or landing or during unstable flight conditions. In particular, the barrier arrangements may be used to block a passage to or within a staircase of an aircraft. Such staircases may for example be provided for connecting different floor levels of the aircraft cabin.

DE 10 2009 004 525 A1 relates to a gripping device for a wheelchair in a vehicle. The gripping device has a vertical carrier element connected to a sidewall of a body structure of the vehicle. A retaining element is rotatably attached to the vertical carrier element with two hinges, so that it is rotatable around a vertical axis. Alternatively, only one hinge point is employed, at which the retaining element is pivotable around the vertical axis as well as a horizontal axis.

US 2009/0260293 A1 relates to a safety gate including an anchoring bracket for anchoring it to an immovable structure adjacent to a passageway to be gated. A safety bar pivotally connected to the anchoring bracket can pivot between a closed position, wherein the safety bar is substantially horizontal to obstruct the passageway, and an open position, wherein the safety bar is substantially vertical to permit unobstructed passage through the passageway.

Barrier arrangements of known types comprise joint units to which a barrier member is attached. The barrier member can typically be moved relative to the joint unit in a pivoting motion to change between a deployed and stowed position. When arranged in its deployed position, an effective blocking of an associated passage in the aircraft cabin by the barrier member is desired. To the contrary, when arranged in its stowed position, it is desired that the barrier member interferes with the passing of passengers and movable items through the passage as little as possible.

To solve these conflicting goals, in the known barrier arrangements extendible kinematic sub-structures of the barrier member are provided to adjust the barrier member's dimensions according to its present position. For example, the kinematic sub-structure is made to extend in the deployed position of the barrier member, whereas in the stowed position the kinematic sub-structure is made to retract. The effective dimensions with which the barrier member extends in the passage can thus be selectively enlarged in the deployed position, whereas in the stowed position, the barrier member's dimensions can be reduced.

These solutions, however, require a large amount of handling operations to be carried out by an operator. Furthermore, the kinematic sub-structures are generally maintenance-intensive and introduce additional error sources into the barrier arrangement.

Accordingly, the invention is directed at the object of providing a deployable barrier arrangement of the above-mentioned type which is easy to operate and highly reliable.

This object is achieved by a deployable barrier arrangement according to claim 1. Preferred embodiments are defined by the dependent claims.

According to an aspect a deployable barrier arrangement comprises a substantially longitudinal barrier member and a joint unit for fixing the barrier member to an inner wall of the aircraft cabin. The joint unit is configured to allow for a movement of the barrier member between a stowed position in which the barrier member extends substantially parallel to the inner wall of the aircraft cabin and a deployed position in which the barrier member extends at an angle of approximately 60° to 120° to the inner wall of the aircraft cabin. In a highly preferred embodiment, however, the barrier member extends at angle of approximately 90° to the inner wall or, in other words, is arranged substantially perpendicular to the inner wall in its deployed position.

The joint unit is further configured to allow for a rotational movement of the barrier member about a longitudinal axis of the barrier member. Compared to the barrier arrangements of known types, the barrier arrangement according to the invention thus is provided with an additional rotational degree of freedom. This may be used for rotating the barrier member about the longitudinal axis by different amounts relative to the joint unit when changing between the stowed and the deployed position. For example, in the deployed position, the barrier member can be oriented such that a section of increased lateral extension of the barrier member extends within the passage (i.e., extends within a cross-sectional area of the aircraft cabin as defined by the passage). In the stowed position, to the contrary, the barrier member can be oriented such that the section of increased lateral extension extends at an angle to the passage, for example by extending parallel to the inner wall. In this way, the effective dimensions of the barrier member with which it extends in the passage can be selectively enlarged and reduced when changing between the deployed and stowed positions.

It will be understood, that the longitudinal axis of the barrier member about which a rotation can be carried out may be formed by any axis extending in a substantially longitudinal of the barrier member. Therefore, the longitudinal axis may not necessarily run through the geometric center or center of gravity of the barrier member. As will be further discussed below, the exact position of this longitudinal axis may instead be defined by the specific type of rotational joint or link within the joint unit to which the barrier member is attached. The joint unit is configured to allow for a simultaneous rotation of the barrier member about the longitudinal axis when moving the barrier member between the stowed and deployed position. Such a simultaneous rotation increases the ease of use when handling the barrier member and thus the operability of the barrier arrangement. The joint unit comprises at least one multiple axes pivot joint which is connected to the barrier member. The multiple axes pivot joint defines at least two rotational axes allowing for the rotation of the barrier member between its stowed and its deployed position as well as the rotation of the barrier member about the longitudinal axis. The multiple axes pivot-joint may be provided, for example, in form of a universal joint, a ball-and-socket joint, a cardan joint or the like. In a highly preferred embodiment, only one multiple axes pivot-joint is provided and forms the only joint/link within the barrier arrangement. This reduces the amount of required maintenance work and limits potential error sources.

The joint unit further comprises a tilted guide surface. The barrier member comprises a complementary tilted contact surface. The contact surface of the barrier member and the guide surface of the joint unit bear against each other. Typically, the guide surface is tilted such that it defines a plane which extends at an angle to the inner wall of the aircraft cabin. For example, the guide surface may be tilted about numerous spatial axes, for example about both spatial axes of a plane extending in parallel to the inner wall and also about the normal axis of this plane.

In this connection, the guide surface is tilted and adapted to interact with the contact surface in such a way that the barrier member is forcibly guided for carrying out a rotation about the longitudinal axis when being moved between the stowed and deployed position. According to the invention, the barrier arrangement allows for a rotation of the barrier member about the longitudinal axis during the respective movement without requiring any additional dedicated handling operations by an operator. This increases the ease of use of the barrier arrangement and ensures an optimal relative positioning of barrier member and joint unit during any stage of movement and/or positioning of the barrier arrangement.

The joint unit may further be configured to limit the rotational movement about the barrier member's longitudinal axis to an amount of 90°. Such a limitation may for example be achieved by providing mechanical stop members within the joint unit and is effective for avoiding operating errors such as collisions of the barrier member with surrounding elements of the aircraft cabin.

Likewise, the joint unit may be configured to limit the rotational movement of the barrier member such that it cannot be moved to past the stowed and/or deployed position. This similarly ensures a safe operation of the barrier arrangement and helps to avoid undesired collisions or interferences of the barrier member with the aircraft cabin's interior.

In a preferred embodiment, the barrier arrangement further comprises a separate stop member which is configured to act as a mechanical stop when the barrier member is moved to its deployed position. The stop member may, for example, be configured to be fixed to a further inner wall extending at a distance from and facing the inner wall at which the joint unit is positioned. In general, such a stop member may be provided as an alternative or additional means to limit the movement of the barrier member to a range between the stowed and deployed position compared to the above-mentioned limitation through the joint unit itself.

In this connection, the stop member may be provided with a receiving section configured to receive a tip end section of the barrier member when the barrier member is moved to its deployed position. The receiving section may be shaped complementary to the tip end section of the barrier member, i.e., be provided with a section having a negative shape of the tip end section. With the aid of such a receiving section, a stable positioning of the barrier member in the deployed position can be achieved. The receiving section may at least in part be elastically deformable in order to form a locking/snap-in connection upon receiving the tip end section of the barrier member.

The barrier arrangement may further comprise a separate holder member which is configured to hold the barrier member in the stowed position. Said holder member may for example be arranged at the same inner wall of the aircraft cabin to which the joint unit is fixed.

In this connection, the holder member may substantially be shaped as a bracket which is configured to receive the barrier member and form of a locking connection therewith. For doing so, the holder member may at least in part be elastically deformable so that the barrier member can snap into the holder member, thus forming the locking connection.

In a preferred embodiment, the barrier arrangement may further comprise a sub-barrier section which is configured to extend substantially parallel to the inner wall of the aircraft cabin when the barrier member is in its stowed position and which is configured to extend at an angle of approximately 60° to 120° to the inner wall of the aircraft cabin when the barrier member in its deployed position. The sub-barrier section may be connected to the barrier member and may generally be provided to define a section of increased lateral extension of the barrier member relative to the longitudinal axis. As indicated above, the barrier member's orientation may thus be selectively adapted so that the sub-barrier section extends within the passage or at an angle thereto by making use of the additionally provided rotational degree of freedom of the barrier member.

In this connection, the sub-barrier section may be formed integrally with the barrier member and may in particular comprise at least one first section extending laterally to the barrier member's longitudinal axis and at least one second section extending parallel to the barrier member's longitudinal axis. The first and the second section are connected to each other. By forming the sub-barrier section and the barrier member as an integral unit, the reliability of the barrier arrangement is highly increased, since no additional joints, links or other kinematic structures need to be provided apart from the joint unit. The first section of the sub-barrier section may generally be provided to space the second section away from the barrier member in a lateral direction. The first and the second section of the sub-barrier section may be arranged at the barrier member to define a L- or T-profile or, if two first sections are provided, a C-profile. In the latter case, the C-profile may be attached to the barrier member with its two end faces such that the barrier member closes the open shape/side of the C-profile. In general, the barrier member and the sub-barrier section may be connected to each other by welding or gluing or by mechanical fastening means. Alternatively, they may be formed as a one-piece element by casting or molding.

The invention furthermore relates to an aircraft cabin area. The aircraft cabin area comprises an inner, preferably vertical wall extending between a floor area and a ceiling area of the aircraft cabin area. A further inner, preferably vertical wall of the aircraft cabin area extends between the floor area and the ceiling area and faces the inner wall. Finally, the aircraft cabin area comprises a deployable barrier arrangement according to any of the previously discussed aspects for selectively blocking a passage in the aircraft cabin area. The passage may in particular lead to or be arranged within a staircase. The barrier arrangement thus may serve to effectively block the passage to or within the staircase to avoid passengers or movable items to enter or pass through the staircase.

In this connection, the sub-barrier section of the barrier arrangement, in the deployed position of the barrier member, may extend towards the floor area. The first section of the sub-barrier section may extend substantially perpendicular to the floor area. Such configuration of the sub-barrier section achieves to effectively increase the dimensions with which the barrier member extends in the passage when arranged in its deployed position, thus preventing for example children from passing the barrier arrangement below the barrier member.

Preferred embodiments of the invention will now be described in greater detail with reference to the appended drawings, wherein
- Figure 1: shows a perspective view of an aircraft cabin area equipped with a deployable barrier arrangement, wherein the barrier arrangement is installed at an entrance to a staircase and the barrier member is arranged in its stowed position;
- Figure 2: shows a top view of the barrier arrangement according to Figure 1;
- Figure 3: shows the aircraft cabin area and the barrier arrangement according to Figure 1 with the barrier member being arranged in its deployed position;
- Figure 4: shows a top view of the barrier arrangement according to Figure 3; and
- Figure 5: shows a detailed view of the joint unit of the barrier arrangement according to the previous figures.

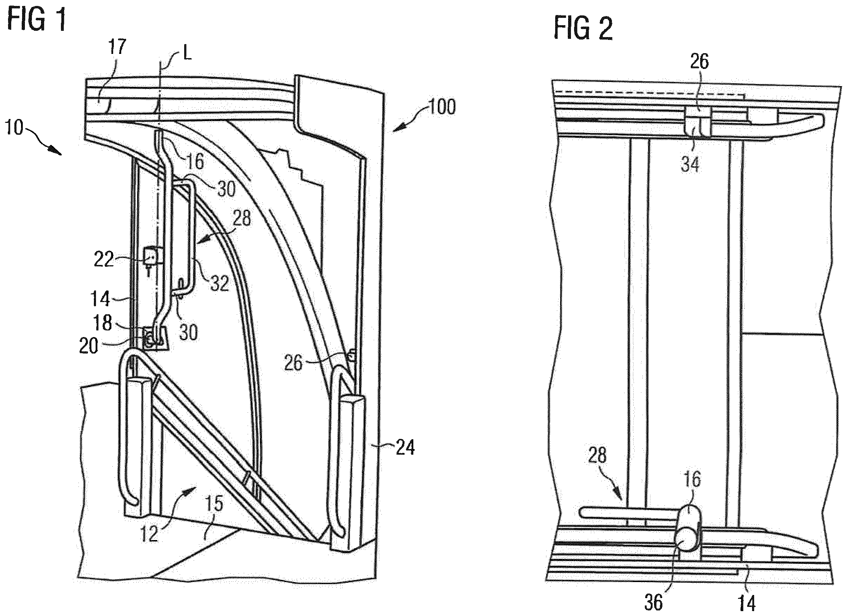

Figure 1 shows a perspective view of an aircraft cabin area 100 equipped with a deployable barrier arrangement 10. The barrier arrangement 10 depicted in Figure 1 is located at an entrance to a staircase 12 and fixed to an inner vertical sidewall 14 of the aircraft cabin. The inner vertical sidewall 14 generally extends between a floor area 15 and a ceiling area 17 of the aircraft cabin. The barrier arrangement 10 comprises a longitudinal barrier member 16 which is connected to a joint unit 18 by a multiple axes pivot joint 20. The joint unit 18 is fixed to the vertical side wall 14 by mechanical means and, as will be described in further detail below, allows for a pivoting motion of the barrier member 16 between a stowed and deployed position as well as for a rotational movement of the barrier member about a longitudinal axis L of the barrier member 16.

The barrier arrangement of Figure 1 furthermore comprises a separate holder member 22 which is arranged at the vertical sidewall 14 and is spaced apart from the joint unit 18 such that it can receive a section of the barrier member 16. The holder member 22 is generally shaped as a bracket and comprises an elastic section, so that it can form a locking/snap-in connection with the barrier member 16. In Fig. 1, the barrier member 16 is depicted in a non-engaged state with the holder member 22 for illustrative purposes only, in order to indicate the bracket shape of the holder member 22. However, according to the depicted embodiment, it is generally contemplated that the barrier member 16 engages with the holder member 22 in the stowed position.

Furthermore, at a further inner vertical sidewall 24 being located opposite to the inner vertical sidewall 14 and facing the inner vertical sidewall 14, a stop member 26 is provided and located approximately at the same height level as the joint unit 18.

The longitudinal barrier member 16 is connected to a sub-barrier section 28 which comprises two first sections 30 extending laterally to the longitudinal axis L of the barrier member 16 as well as a second section 32 extending parallel to the longitudinal axis L. In the shown embodiment, the first and second sections 30, 32 are arranged to form a substantially C-shaped profile which is connected to the barrier member 16 such that the latter closes the open side of the C-shaped profile. The barrier member 16 and the sub-barrier section 28 are generally formed as a one-piece integral unit. As further obvious from figure 1, the sub-barrier section 28 defines a substantially planar section of increased lateral extension of the barrier member 16.

In Figure 1, the barrier member 16 is arranged in its stowed position. In this position, the barrier member 16 substantially extends in parallel to the vertical sidewall 14. The same applies to the sub-barrier section 28 respectively to the section of increased lateral extension as defined by its C-shaped profile. Therefore, the barrier member 16 does hardly extend within the passage and thus does not interfere with a free passing thereof.

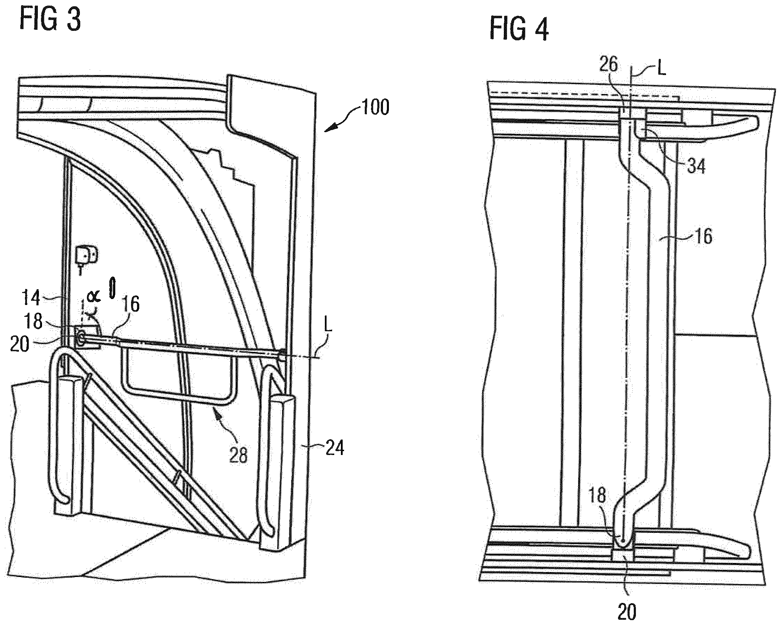

Figure 2 shows a top view of the barrier arrangement of Figure 1. As obvious from this figure, the stop member 26 comprises a receiving section 34 which is shaped complementary to a tip end section 36 of the longitudinal barrier member 16. Therefore, the receiving section 34 can receive the tip end section 36 in a positively locking manner and stabilize and hold the barrier member 16 in its deployed position. In Figures 3 and 4, the barrier arrangement according to the previous figures is shown with the barrier member 16 being arranged in its deployed position. In this position, the barrier member 16 extends substantially horizontally from the joint unit 18 towards the further vertical side wall 24. There, it is received in the receiving section 34 of stop member 26. The barrier member 16 thus extends in an angle α of 90° to the vertical sidewalls 14, 24 and extends over the complete width of the staircase 12. As a result, the entrance to the staircase 12 is effectively blocked. For moving the barrier member 16 between the stowed and deployed position, the barrier member 16 is manually pivoted about the joint unit 18 by means of the multiple-axis pivot joint 20.

From Figures 3 and 4, it is furthermore obvious that the sub-barrier section 28, respectively the section of increased lateral extension defined by the C-shaped profile, does equally extend at an angle α of 90° to the vertical side wall 14. This is achieved by rotating the unit of barrier member 16 and sub-barrier section 28 simultaneously about the longitudinal axis L by an amount of 90° L of when moving the barrier member from the stowed position to the deployed position.

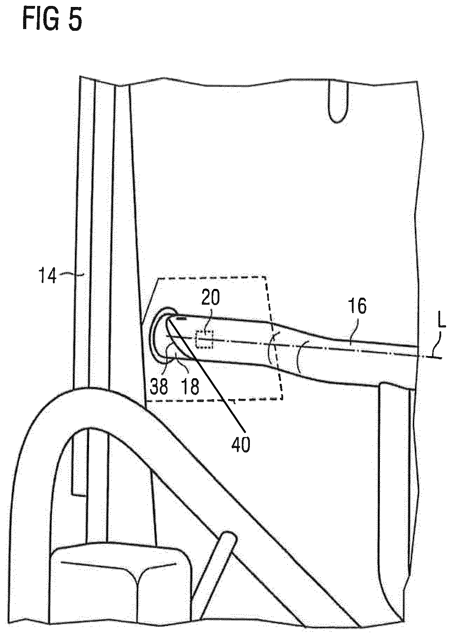

In Figure 5, the joint unit 18 is depicted in detail. As can be seen from this figure, the joint unit 18 is provided with a tilted guide surface 38 which extends at an angle to the vertical side wall 14. The end section of the barrier member 16 is provided with a contact surface 40 which is complementary tilted to the guide surface 38. The schematically illustrated multiple axes pivot joint 20 is arranged between the joint unit 18 and barrier member 16 such it connects the barrier member 16 and the joint unit 18 and such that the guide surface 38 and the contact surface 40 bear against each other. Accordingly, the multiple axes pivot joint 20, respectively the relative position of the barrier member 16 and the multiple axes pivot joint 20 define the position of the longitudinal axis L of the barrier member 16 about which a rotation of the same can be carried out.

The contact surface 40 is tilted in such a way that the barrier member 16 is forcibly guided for a rotation about its longitudinal axis L by 90° when being moved between the stowed and deployed position. In this connection, the direction of rotation points out of the image plane of figures 3 and 4 when moved to the deployed position and accordingly points into the image planes when moved to the stowed position. Therefore, when changing the position of the barrier member 16 between the stowed and deployed positions according to Figures 1 and 3, a rotation of the unit comprising the barrier member 16 and the sub-barrier section 28 by 90° is achieved without any dedicated additional handling operations by an operator. Thus, by providing the tilted guide surface 40, an optimal orientation of the barrier member 16 and the sub-barrier section 28 in the stowed as well as in the deployed position is ensured.

## Claims

1. Deployable barrier arrangement (10) for selectively blocking a passage in an aircraft cabin,
wherein the barrier arrangement (10) comprises a substantially longitudinal barrier member (16) and a joint unit (18) for fixing the barrier member (16) to an inner wall (14) of the aircraft cabin,
wherein the joint unit (18) is configured to allow for a movement of the barrier member (16) between a stowed position in which the barrier member (16) extends substantially parallel to the inner wall (14) of the aircraft cabin and a deployed position in which the barrier member (16) extends at an angle (α) of approximately 60° to 120° to the inner wall (14) of the aircraft cabin to block the passage, and wherein the joint unit (18) is further configured to allow for a rotational movement of the barrier member (16) about a longitudinal axis (L) of the barrier member (16), **characterised in that** the joint unit (18) comprises a tilted guide surface (38) and the barrier member (16) comprises a complementary tilted contact surface (40), wherein the contact surface (40) of the barrier member (16) and the guide surface (38) of the joint unit (18) bear against each other.

2. Deployable barrier arrangement (10) according to claim 1,
**characterised in that** the joint unit (18) is configured to limit the rotational movement about the barrier member's longitudinal axis (L) to an amount of 90°.

3. Deployable barrier arrangement (10) according to any of the preceding claims,
**characterised in that** the joint unit (18) is configured to limit the movement of the barrier member (16) such that it cannot be moved past the stowed and/or the deployed position.

4. Deployable barrier arrangement (10) according to any of the preceding claims,
characterised that the barrier arrangement (10) further comprises a separate stop member (26) which is configured to be fixed to a further inner wall (24) facing the inner wall (14) and which further is configured to act as a mechanical stop when the barrier member (16) is moved to its deployed position.

5. Deployable barrier arrangement (10) according to claim 4,
**characterised in that** the stop member (26) is provided with a receiving section (34) configured to receive a tip end section (36) of the barrier member (16) when the barrier member (16) is moved to its deployed position.

6. Deployable barrier arrangement (10) according to any of the preceding claims,
characterised that the barrier arrangement (10) further comprises a separate holder member (22) which is configured to be fixed to the inner wall (14) and which further is configured to hold the barrier member (16) in the stowed position

7. Deployable barrier arrangement (10) according to claim 6,
**characterised in that** the holder member (22) is substantially shaped as a bracket which is configured to receive the barrier member (16) and form a locking connection therewith.

8. Deployable barrier arrangement (10) according to any of the preceding claims,
**characterised in that** the barrier arrangement (10) further comprises a sub-barrier section (28) which extends substantially parallel to the inner wall (14) of the aircraft cabin when the barrier member (16) is in its stowed position and which extends at an angle (α) of approximately 60° to 120° to the inner wall (14) of the aircraft cabin when the barrier member (16) is in its deployed position, the sub-barrier section (28) in particular being connected to the barrier member (16).

9. Deployable barrier arrangement (10) according to claim 8,
**characterised in that** the sub-barrier section (28) is formed integrally with the barrier member (16) and in particular comprises at least one first section (30) extending laterally to the barrier member's longitudinal axis (L) and at least one second section (32) extending parallel to the barrier member's longitudinal axis (L), wherein the first and the second section (30, 32) are connected to each other.

10. Aircraft cabin area (100) comprising:
- an inner wall (14) extending between a floor area (15) and ceiling area (17) of the aircraft cabin area,
- a further inner wall (24) extending between the floor area (15) and the ceiling area (17) of the aircraft cabin area and facing the inner wall (14), and
- a deployable barrier arrangement (10) according to any of the preceding claims for selectively blocking a passage in the aircraft cabin area (100), the passage in particular leading to or being arranged within a staircase (12).

11. Aircraft cabin area according to claim 10,
wherein the sub-barrier section (28) of the barrier arrangement (10), in the deployed position of the barrier member (16), extends from the barrier member (16) towards the floor area (15), the first section (30) of the sub-barrier section (28) in particular extending substantially perpendicular to the floor area (15).

## Patentansprüche

1. Einsetzbare Absperranordnung (10) zum wahlweisen Versperren eines Durchgangs in einer Flugzeugkabine,
wobei die Absperranordnung (10) ein im Wesentlichen langgestrecktes Absperrelement (16) und eine Gelenkeinheit (18) zum Fixieren des Absperrelements (16) an einer Innenwand (14) der Flugzeugkabine umfasst,
wobei die Gelenkeinheit (18) dazu eingerichtet ist, eine Bewegung des Absperrelements (16) zwischen einer Verstauposition, in der sich das Absperrelement (16) im Wesentlichen parallel zu der Innenwand (14) der Flugzeugkabine erstreckt, und einer Einsatzposition, in der sich das Absperrelement (16) in einem Winkel (α) von ungefähr 60° bis 120° zu der Innenwand (14) der Flugzeugkabine erstreckt, zu ermöglichen, um den Durchgang zu versperren, und
wobei die Gelenkeinheit (18) des Weiteren dazu eingerichtet ist, eine Drehbewegung des Absperrelements (16) um eine Längsachse (L) des Absperrelements (16) zu ermöglichen,
**dadurch gekennzeichnet, dass** die Gelenkeinheit (18) eine schräge Führungsfläche (38) umfasst, und das Absperrelement (16) eine komplementäre schräge Kontaktfläche (40) umfasst, wobei die Kontaktfläche (40) des Absperrelements (16) und die Führungsfläche (38) der Gelenkeinheit (18) aneinander anliegen.

2. Einsetzbare Absperranordnung (10) gemäß Anspruch 1,
**dadurch gekennzeichnet, dass** die Gelenkeinheit (18) dazu eingerichtet ist, die Drehbewegung um die Längsachse (L) des Absperrelements auf 90° zu begrenzen.

3. Einsetzbare Absperranordnung (10) gemäß einem der vorangegangenen Ansprüche,
**dadurch gekennzeichnet, dass** die Gelenkeinheit (18) dazu eingerichtet ist, die Bewegung des Absperrelements (16) so zu begrenzen, dass es nicht über die Verstau- und/oder die Einsatzposition hinaus bewegt werden kann.

4. Einsetzbare Absperranordnung (10) gemäß einem der vorangegangenen Ansprüche,
**dadurch gekennzeichnet, dass** die Absperranordnung (10) des Weiteren einen separaten Stopper (26) umfasst, der dazu eingerichtet ist, an einer weiteren Innenwand (24), die der Innenwand (14) zugewandt ist, angebracht zu werden, und der ferner dazu eingerichtet ist, als ein mechanischer Anschlag zu dienen, wenn das Absperrelement (16) in seine Einsatzposition bewegt wird.

5. Einsetzbare Absperranordnung (10) gemäß Anspruch 4,
**dadurch gekennzeichnet, dass** der Stopper (26) mit einem Aufnahmeabschnitt (34) ausgestattet ist, der dazu eingerichtet ist, einen Spitzendabschnitt (36) des Absperrelements (16) aufzunehmen, wenn das Absperrelement (60) in seine Einsatzposition bewegt wird.

6. Einsetzbare Absperranordnung (10) gemäß einem der vorangegangenen Ansprüche,
**dadurch gekennzeichnet, dass** die Absperranordnung (10) des Weiteren ein separates Halteelement (22) umfasst, das dazu eingerichtet ist, an der Innenwand (14) befestigt zu werden, und das ferner dazu eingerichtet ist, das Absperrelement (16) in der Verstauposition zu halten.

7. Einsetzbare Absperranordnung (10) gemäß Anspruch 6,
**dadurch gekennzeichnet, dass** das Halteelement (22) im Wesentlichen wie eine Klammer geformt ist, die dazu eingerichtet ist, das Halteelement (16) aufzunehmen und eine Verriegelungsverbindung damit herzustellen.

8. Einsetzbare Absperranordnung (10) gemäß einem der vorangegangenen Ansprüche,
**dadurch gekennzeichnet, dass** die Absperranordnung (10) des Weiteren einen Unterabsperrabschnitt (28) umfasst, der sich im Wesentlichen parallel zu der Innenwand (14) der Flugzeugkabine erstreckt, wenn das Absperrelement (16) in seiner Verstauposition ist, und der sich in einem Winkel (α) von ungefähr 60° bis 120° zu der Innenwand (14) der Flugzeugkabine erstreckt, wenn das Absperrelement (16) in seiner Einsatzposition ist, wobei der Unterabsperrabschnitt (28) insbesondere mit dem Absperrelement (16) verbunden ist.

9. Einsetzbare Absperranordnung (10) gemäß Anspruch 8,
**dadurch gekennzeichnet, dass** der Unterabsperrabschnitt (28) einstückig mit dem Absperrelement (16) gebildet ist und insbesondere mindestens einen ersten Abschnitt (30), der sich seitlich zu der Längsachse (L) des Absperrelements erstreckt, und mindestens einen zweiten Abschnitt (32), der sich parallel zu der Längsachse (L) des Absperrelements erstreckt, umfasst, wobei der erste und der zweite Abschnitt (30, 32) miteinander verbunden sind.

10. Flugzeugkabinenbereich (100), umfassend:
- eine Innenwand (14), die sich zwischen einem Bodenbereich (15) und einem Deckenbereich (17) des Flugzeugkabinenbereichs erstreckt,
- eine weitere Innenwand (24), die sich zwischen dem Bodenbereich (15) und dem Deckenbereich (17) des Flugzeugkabinenbereichs erstreckt und der Innenwand (14) zugewandt ist, und
- eine einsetzbare Absperranordnung (10) gemäß einem der vorangegangenen Ansprüche zum wahlweisen Versperren eines Durchgangs in dem Flugzeugkabinenbereich (100), wobei der Durchgang insbesondere zu einem Treppenhaus (12) führt oder darin angeordnet ist.

11. Flugzeugkabinenbereich (100) gemäß Anspruch 10,
wobei sich der Unterabsperrabschnitt (28) der Absperranordnung (10), in der Einsatzposition des Absperrelements (16), von dem Absperrelement (16) zu dem Bodenbereich (15) erstreckt, wobei sich der erste Abschnitt (30) des Unterabsperrabschnitts (28) insbesondere im Wesentlichen senkrecht zu dem Bodenbereich (50) erstreckt.

## Revendications

1. Agencement de barrière déployable (10) destiné à bloquer sélectivement un passage dans une cabine d'aéronef,
dans lequel l'agencement de barrière (10) comprend un élément de barrière (16) sensiblement longitudinal et une unité d'articulation (18) destinée à fixer l'élément de barrière (16) à une paroi interne (14) de la cabine d'aéronef,
dans lequel l'unité d'articulation (18) est configurée pour permettre un déplacement de l'élément de barrière (16) entre une position pliée dans laquelle l'élément de barrière (16) s'étend sensiblement parallèle à la paroi interne (14) de la cabine d'aéronef et une position déployée dans laquelle l'élément de barrière (16) s'étend à un angle (α) d'approximativement 60° à 120° par rapport à la paroi interne (14) de la cabine d'aéronef pour bloquer le passage, et
dans lequel l'unité d'articulation (18) est en outre configurée pour permettre un déplacement en rotation de l'élément de barrière (16) autour d'un axe longitudinal (L) de l'élément de barrière (16), **caractérisé en ce que** l'unité d'articulation (18) comprend une surface de guidage inclinée (38) et l'élément de barrière (16) comprend une surface de contact inclinée complémentaire (40), dans lequel la surface de contact (40) de l'élément de barrière (16) et la surface de guidage (38) de l'unité d'articulation (18) reposent l'une contre l'autre.

2. Agencement de barrière déployable (10) selon la revendication 1,
**caractérisé en ce que** l'unité d'articulation (18) est configurée pour limiter le déplacement en rotation autour de l'axe longitudinal (L) de l'élément de barrière à une quantité de 90°.

3. Agencement de barrière déployable (10) selon l'une quelconque des revendications précédentes,
**caractérisé en ce que** l'unité articulation (18) est configurée pour limiter le déplacement de l'élément de barrière (16) d'une manière telle qu'elle ne peut pas se déplacer au-delà de la position pliée et/ou de la position déployée.

4. Agencement de barrière déployable (10) selon l'une quelconque des revendications précédentes,
**caractérisé en ce que** l'agencement de barrière (10) comprend en outre un élément de butée séparé (26) qui est configuré pour être fixé à une paroi interne supplémentaire (24) en regard de la paroi interne (14) et qui est en outre configuré pour agir comme butée mécanique lorsque l'élément de barrière (16) est déplacé vers sa position déployée.

5. Agencement de barrière déployable (10) selon la revendication 4,
**caractérisé en ce que** l'élément de butée (26) est muni d'une section de réception (34) configurée pour recevoir une section d'extrémité de pointe (36) de l'élément de barrière (16) lorsque l'élément de barrière (16) est déplacé vers sa position déployée.

6. Agencement de barrière déployable (10) selon l'une quelconque des revendications précédentes,
**caractérisé en ce que** l'agencement de barrière (10) comprend en outre un élément de maintien séparé (22) qui est configuré pour être fixé à la paroi interne (14) et qui est en outre configuré pour maintenir l'élément de barrière (16) dans la position pliée.

7. Agencement de barrière déployable (10) selon la revendication 6,
**caractérisé en ce que** l'élément de maintien (22) est sensiblement formé comme un support qui est configuré pour recevoir l'élément de barrière (16) et former une un raccordement de verrouillage entre eux.

8. Agencement de barrière déployable (10) selon l'une quelconque des revendications précédentes,
**caractérisé en ce que** l'agencement de barrière (10) comprend en outre une section de sous-barrière (28) qui s'étend sensiblement parallèle à la paroi interne (14) de la cabine d'aéronef lorsque l'élément de barrière (16) se trouve dans sa position pliée et qui s'étend à un angle (α) d'approximativement 60° à 120° par rapport à la paroi interne (14) de la cabine d'aéronef lorsque l'élément de barrière (16) se trouve dans sa position déployée, la section de sous-barrière (28) en particulier étant raccordée à l'élément de barrière (16).

9. Agencement de barrière déployable (10) selon la revendication 8,
**caractérisé en ce que** la section de sous-barrière (28) est formée solidairement avec l'élément de barrière (16) et comprend en particulier au moins une première section (30) s'étendant latéralement par rapport à l'axe longitudinal (L) de l'élément de barrière et au moins une deuxième section (32) s'étendant parallèlement à l'axe longitudinal (L) de l'élément de barrière, dans lequel les première et deuxième sections (30, 32) sont raccordées l'une à l'autre.

10. Zone (100) de cabine d'aéronef comprenant :
- une paroi interne (14) s'étendant entre une zone de plancher (15) et une zone de plafond (17) de la zone de cabine d'aéronef,
- une paroi interne supplémentaire (24) s'étendant entre la zone de plancher (15) et la zone de plafond (17) de la zone de cabine d'aéronef et en regard de la paroi interne (14), et
- un agencement de barrière déployable (10) selon l'une quelconque des revendications précédentes pour bloquer sélectivement un passage dans la zone (100) de cabine d'aéronef, le passage en particulier menant vers ou étant agencé à l'intérieur d'un escalier (12).

11. Zone de cabine d'aéronef selon la revendication 10,
dans laquelle la section de sous-barrière (28) de l'agencement de barrière (10), dans la position déployée de l'élément de barrière (16), s'étend depuis l'élément de barrière (16) vers la zone de plancher (15), la première section (30) de la section de sous-barrière (28) en particulier s'étendant sensiblement perpendiculaire à la zone de plancher (15).
